# EUROPÄISCHE PATENTANMELDUNG

(11) **EP 1 769 884 A1**
(43) Veröffentlichungstag der Anmeldung: **04.04.2007**
(21) Anmeldenummer: 06120351.9
(22) Anmeldetag: 08.09.2006
(51) Int. Cl.: B23Q 11/10

(54) **Verfahren und Vorrichtung zur Aufbereitung von flüssigen Medien mit Verarbeitungsrückständen**

(30) Priorität: 08.09.2005 DE 102005042945; 23.01.2006 DE 102006003043
(71) Anmelder: KÖBO ECO>PROCESS GmbH, 42281 Wuppertal (DE)
(72) Erfinder:
(74) Vertreter: Rieder, Hans-Joachim

(57) **Zusammenfassung**

Die Erfindung betrifft ein Verfahren zur Entsorgung von flüssigen Medien (25) mit Verarbeitungsrückständen, wie bspw. Späne, von Bearbeitungsmaschinen (1,2,3) in einem Produktionsbetrieb, wobei die Medien (25) über eine oder mehrere Rücklauf- Rohrleitungen (10) einem Sammelbehälter (S) zur filtrierenden Aufbereitung zugeführt werden. Um ein vorteilhaftes Verfahren, das auch anlagetechnisch möglichst einfach ist, anzugeben, wird vorgeschlagen, dass aufbereitetes Medium (25) in einen Druck- Spülbehälter (15) geleitet wird und aus dem Druck- Spülbehälter (15) kontinuierlich oder diskontinuierlich mit Hilfe dieses Mediums (25) eine Spülung der Rücklauf- Rohrleitung (10) vorgenommen wird.

## Beschreibung

Die Erfindung betrifft ein Verfahren zum Entsorgen von flüssigen Medien mit Produktionsrückständen und auch eine Vorrichtung bzw. Anlagenanordnung, mit der beispielsweise dieses Verfahren dann durchgeführt werden kann.

Ein solches Verfahren und eine solche Vorrichtung ist beispielsweise bekannt aus der EP 0 413 129 B1. Die Vorrichtung weist mehrere Zulaufbehälter auf, in denen sich ein flüssiges Medium mit Produktionsrückständen von einer Bearbeitungsmaschine befindet. Das verunreinigte Medium wird mittels einer Pumpe durch Rohrleitungen in einen Einlauf-Hochbehälter gepumpt. An dem Einlauf-Hochbehälter ist eine Auslassleitung angeordnet, die zu einer Sammelleitung führt. An die Sammelleitung sind mehrere Einlauf-Hochbehälter angeschlossen. Die Sammelleitung führt zu einem Sammeltank, in welchem das verunreinigte Medium gesammelt und filtriert werden kann. Zur Filtrierung ist eine Filtrieranlage vorgesehen. Am Ende der Sammelleitung vor dem Sammeltank ist ein Funktions-Absperrschieber eingebaut. Wenn der Funktions-Absperrschieber geschlossen wird, läuft zuerst die Sammelleitung und anschließend der Einlauf-Hochbehälter voll. Nachdem der Funktions-Absperrschieber wieder geöffnet wird, fließt das verunreinigte Medium durch die geodätisch höhere Anordnung der Einlauf-Hochbehälter schlagartig durch die Sammelleitung. So wird die Gefahr von Sedimentation verhindert. Das Medium aus dem Sammeltank, welches aufbereitet worden ist, wird mittels einer Pumpe über eine Rohrleitung wieder in den Zulaufbehälter gepumpt. Das aufbereitete Medium wird dann von der Bearbeitungsmaschine verwendet und durchläuft erneut den zuvor beschriebenen Kreislauf.

Die Erfindung beschäftigt sich demgegenüber mit der Aufgabe, ein vorteilhaftes Verfahren, das auch anlagentechnisch möglichst einfach ist, anzugeben.

Hierbei ist insbesondere darauf abgestellt, dass aufbereitetes Medium in einen Druck-Spülbehälter geleitet wird und aus dem Druck-Spülbehälter kontinuierlich oder diskontinuierlich mit Hilfe dieses Mediums eine Spülung der Rücklauf-Rohrleitung durchgeführt wird.

Das Medium wird vom jeweiligen Anfallsort, also bspw. einer Produktions-Bearbeitungsmaschine wie einer Dreh- oder Fräsmaschine, über Rohrleitungen, letztlich über die genannten Rücklauf-Rohrleitungen, zu einem Sammelbehälter einer Aufbereitungsanlage transportiert. Die Aufbereitung besteht vorwiegend und insbesondere aus einer Filtrierung. Hierbei sind ein oder mehrere Spülbehälter, nämlich bevorzugt Druck-Spülbehälter vorgesehen, die geodätisch oberhalb der Rücklauf-Rohrleitung angeordnet sind. Über die Maschinen-Vorlaufleitung, über welche also gereinigtes Medium zu den Bearbeitungsmaschinen zurückgeführt wird, werden der oder die Druck-Spülbehälter mit gefiltertem Medium gefüllt, und zwar bevorzugt teilgefüllt. Das aufbereitete Medium wird wieder von den Bearbeitungsmaschinen verwendet.

Der Druck-Spülbehälter ist weiter bevorzugt beim Füllvorgang hermetisch abgeschlossen, so dass sich oberhalb des Mediums, eines Freispiegels dieses Mediums, in dem Druck-Spülbehälter eine zunehmend komprimierte (Luft-) Atmosphäre befindet. Der Druck in dieser Atmosphäre kann auch sehr einfach dann als Indikator für das Füllmaß des Druck-Spülbehälters herangezogen werden. Natürlich auch oder alternativ der Flüssigkeitsdruck. So wird dann bei Erreichen eines voreingestellten Innendrucks des Druck-Spülbehälters der Füllvorgang des Behälters beendet. Zusätzlich oder alternativ kann auch über eine Druckluftleitung, die in geeigneter Weise in den oberen Bereich, in welchem die unter Druck befindliche Atmosphäre ist, des Druck-Spülbehälters mündet, der Innendruck des Druck-Spülbehälters weiter erhöht werden.

Das von den Bearbeitungsmaschinen zurückzuführende verschmutzte Medium wird in eine mit Gefälle angeordnete Rücklauf-Rohrleitung geleitet und läuft darin durch freien Rückfluss zu dem Sammelbehälter bzw. der Filtrierungsvorrichtung. Bevorzugt intermitierend, in einstellbaren bzw. voreingestellten Zeitabständen, wird die Spülung der Rücklauf-Rohrleitung eingeleitet, um darin etwa abgesetzte Späne oder sonstige Produktionsrückstände frei zu spülen und zur Filtrierungsvorrichtung zu schaffen. Ein dauerhaftes Absetzen der Späne bzw. sonstigen Produktionsrückstände ist zu vermeiden.

Die Spülung der Rücklauf-Rohrleitung steht in Abhängigkeit eines in dem Druck-Spülbehälter herrschenden Drucks. Bevorzugt erfolgt die Spülung der Rücklauf-Rohrleitung intermittierend, in einstellbaren bzw. voreingestellten Zeitabständen. Wie zuvor erwähnt, baut sich in dem hermetisch abgeschlossenen Druck-Spülbehälter ein Druck auf. Falls dieser Druck zur Spülung der Rücklauf-Rohrleitung nicht ausreichen sollte, kann über die zuvor erwähnte Druckluftleitung der Druck in dem Druck-Spülbehälter erhöht werden. Es ist auch denkbar, dass der Druck aufgrund der Höhenlage des Druck-Spülbehälters ausreicht, um die Rücklauf-Rohrleitung zu spülen. Anderenfalls kann auch noch mittels einer gesonderten Druckbeaufschlagung der fehlende Spüldruck erzeugt werden. Somit ist es denkbar, dass der Druck-Spülbehälter allein durch seine geodätisch höhere Anordnung den Druck aufbaut. Da der Druck zum Spülen der Rücklauf-Rohrleitung auch durch eine gesonderte Druckbeaufschlagung erreicht werden kann, ist es dann nicht mehr nötig, den Druck-Spülbehälter geodätisch höher anzuordnen als die Rücklauf-Rohrleitung. Der herrschende Druck in dem Druck-Spülbehälter wird mittels eines Drucksensors erfasst. Dieser löst dann bei einem eingestellten Druck und nach Erreichen der voreingestellten Intervallzeit den Spülvorgang der Rücklauf-Rohrleitung aus.

Am unteren Auslass des Druck-Spülbehälters ist hierzu ein Auslassventil angeordnet, das für einen solchen Spülvorgang entsprechend geöffnet wird. Das in dem Druck-Spülbehälter befindliche Medium wird somit schlagartig mit dem vorhandenen bzw. voreingestellten Druck an einem sehr weit stromaufwärts gelegenen Punkt in die Rücklauf-Rohrleitung eingeleitet.

Durch den Druck in die damit gegebene Beschleunigung des Mediums erfolgt das Freispülen der Rücklauf-Rohrleitung.

Nachdem der Druck-Spülbehälter entsprechend entleert ist bzw. der (Über-) Druck abgebaut ist und sich ggf. auch ein Unterdruck eingestellt hat, wird ein Belüftungsventil an diesem Druck-Spülbehälter geöffnet, um eine Luftzufuhr in den Druck-Spülbehälter zu ermöglichen. Bevorzugt wird eine Ausbildung eines Unterdrucks in dem Druck-Spülbehälter vermieden. Durch die Öffnung des Belüftungsventils wird also jedenfalls ein Druckausgleich hergestellt.

Nach Beendigung des Spülvorganges wird das Auslassventil und das Belüftungsventil wieder geschlossen und der Befüllvorgang des Druck-Spülbehälters über die Maschinen-Vorlaufleitung beginnt von neuem.

Das Medium, welches die Rücklauf-Rohrleitung gespült hat, befindet sich anschließend in dem Sammelbehälter und wird dort wieder aufbereitet. Das aufbereitete Medium wird zunächst durch dieselbe Leitung zu den Bearbeitungsmaschinen und dem Spülbehälter befördert. In die Bearbeitungsmaschinen und den Druck-Spülbehälter gelangt nur ein aufbereitetes Medium. Dadurch wird eine Verschmutzung des Druck-Spülbehälters vermieden. Bevorzugt verläuft eine von dem Sammelbehälter ausgehende Leitung für aufbereitetes Medium sowohl zu den Bearbeitungsmaschinen wie auch unmittelbar zu dem Druck-Spülbehälter. Von der Bearbeitungsmaschine kann kommendes nicht aufbereitetes Medium nur in den Sammelbehälter fließen. So wird erreicht, dass der Durck-Spülbehälter nicht durch verschmutztes Medium verunreinigt werden kann. Der Druck-Spülbehälter weist einen Druckluftanschluss für eine Druckluftleitung auf. Die Druckluftleitung mündet in den Druck-Spülbehälter. Der Druck-Spülbehälter ist zur Ausbildung eines Freispiegels des Mediums in den Druck-Spülbehälter hermetisch schließbar. In der Zubringerleitung, welche von den Bearbeitungsmaschinen weg zur Rücklauf-Rohrleitung führt, ist optional ein Absperrventil und/oder eine Rückschlagklappe angeordnet. Vor einer Einmündung der Ablaufleitung des Druck-Spülbehälters in die Rücklauf-Rohrleitung ist ein Auslassventil angeordnet. Durch das Auslassventil kann der Spülvorgang freigegeben werden. In der Zuleitung des Druck-Spülbehälters ist ein Durchflussbegrenzer angeordnet. Die Rücklauf-Rohrleitung ist jedenfalls ab der Einmündung des Druck-Spülbehälters mit einem Gefälle ausgebildet. Das verunreinigte Medium von den Bearbeitungsmaschinen wird durch eine Pumpe durch die Zubringerleitung zu der Einmündung der Rücklauf-Rohrleitung 10 gepumpt. Von dort aus fließt das verunreinigte Medium allein durch die Ausgestaltung des Gefälles der Rücklauf-Rohrleitung. Das verunreinigte Medium fließt dann durch das Gefälle bis in den Sammelbehälter. Um den herrschenden Druck nach einer Spülung in dem Druck-Spülbehälter ausgleichen zu können, ist ein betätigbares Belüftungsventil vorgesehen.

Je nach Größe einer solchen Anlage können entsprechend mehrere Druck-Spülbehälter und/oder mehrere Spülanschlüsse in Rücklauf-Rohrleitungen vorgesehen sein. Bevorzugt ist jedoch nur eine derartige Spülstelle vorgesehen.

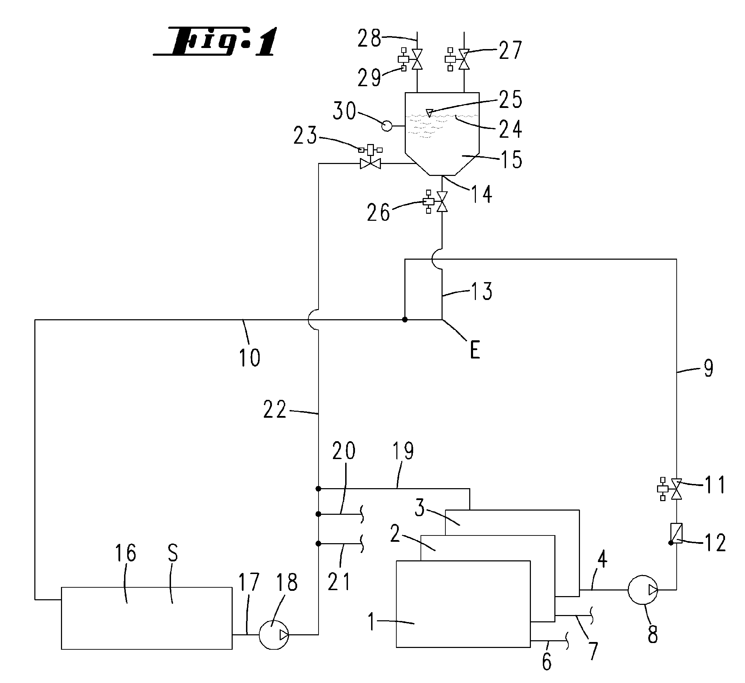

Anhand der beigefügten Zeichnung, die schematisch eine derartige Anlage darstellt, erfolgt folgende weitere Erläuterung:

Es sind zunächst eine Vielzahl von Bearbeitungsmaschinen 1, 2, 3 angedeutet, von welchen über Leitungen 4, 6, 7 mit entsprechenden Produktionsrückständen versehenes Spülmedium abgeleitet werden. Mittels einer oder mehrerer Pumpen 8 wird ein verunreinigtes Medium über eine Zubringerleitung 9 zu einer Rücklauf-Rohrleitung 10 geleitet.

Ausgehend von einer Einmündung E einer Ablaufleitung 13 eines Druck-Spülbehälters 15 weist die Rücklauf-Rohrleitung 10 ein Gefälle auf. Durch das Gefälle der Rücklauf-Rohrleitung 10 ist keine Pumpe mehr nötig, um das verunreinigte Medium von der Einmündung E aus weiter zu transportieren.

In der Zubringerleitung 9 kann ein Absperrventil 11 und/oder eine Rückschlagklappe 12 vorgesehen sein.

Am stromaufwärtigen Ende der Rücklauf-Rohrleitung 10 mündet in diese Rücklauf-Rohrleitung 10 die Ablaufleitung 13, welche mit dem Auslass 14 des Druck-Spülbehälters 15 verbunden ist. Die Rücklauf-Rohrleitung 10 leitet das verunreinigte Medium in eine einen Sammelbehälter S aufweisende Aufbereitungs-/Filtrierungsanlage 16. Aus der Filtrierungsanlage 16 wird das gereinigte Medium 25 über eine Leitung 17 und eine Pumpe 18 einerseits, über eine oder mehrere Abzweigungsleitungen 19, 20, 21, wieder zu den Bearbeitungsmaschinen 1, 2, 3 geleitet, und andererseits in den Druck-Spülbehälter 15, nämlich über einen Fortsatz der Leitung 17, der als Zuleitung 22 bezeichnet wird.

Da die Zubringerleitung 9 direkt an die Rücklauf-Rohrleitung 10 angeschlossen ist, ist es nicht möglich, dass verunreinigtes Medium in den Druck-Spülbehälter 15 gelangen kann. Ein verunreinigtes Medium kann nur in den Sammelbehälter S geleitet werden.

Wie zuvor erwähnt, befindet sich in dem Sammelbehälter S eine Aufbereitungs-/Filtrierungsanlage 16. Die Aufbereitungs-/Filtrierungsanlage 16 befreit das verunreinigte Medium von den Produktionsrückständen der Bearbeitungsmaschinen 1, 2, 3. Nach Beendigung der Aufbereitung des Mediums wird das aufbereitete Medium 25 mittels der Pumpe 18 über die Leitung 17 einerseits zu den Bearbeitungsmaschinen 1, 2, 3 und andererseits zu dem Druck-Spülbehälter 15 geleitet. Über mehrere Abzweigungsleitungen 19, 20, 21 gelangt das gereinigte Medium 25 zu den Bearbeitungsmaschinen 1, 2, 3. Über die Zuleitung 22, die sich der Leitung 17 anschließt, gelangt das gereinigte Medium 25 zu dem Druck-Spülbehälter 15.

Vor dem Druck-Spülbehälter 15 kann in die Zuleitung 22 der Leitung 17 ein Durchflussbegrenzer 23 angeordnet sein. Dieser kann bspw. in der Bandbreite von 25 bis 250, bevorzugt 50 bis 2001/min eingestellt sein.

Die Rücklauf-Rohrleitung 10 ist bevorzugt mit einem Gefälle von 0,25 bis 1,5, weiter bevorzugt von 0,5 bis 1 % ausgelegt. Der Transport in dieser Rücklauf-Rohrleitung 10 erfolgt außerhalb von Druckspülungen, wie nachstehend noch erläutert, allein durch das genannte geodätische Gefälle dieser Rücklauf-Rohrleitung 10.

In den Druck-Spülbehälter 15 wird unter Ausbildung eines Freispiegels 24 über die Leitung 17 und die Zuleitung 22 zurückgepumptes filtriertes Medium 25 gespeichert. Und zwar bis sich in dem Druck-Spülbehälter 15 ein gewisser Druck, etwa bevorzugt zwischen 2, 5 und 7 bar, weiter bevorzugt zwischen 3 und 5 bar eingestellt hat. Nach Erreichen eines derart vorbestimmten Druckes kann ein Auslassventil 26 in der Ablaufleitung 13 geöffnet werden, worauf sich ein Druckschwall in der Rücklauf-Rohrleitung 10 ergibt, der eine Art Zwangsspülung dieser Rücklauf-Rohrleitung 10 bewirkt und etwa abgesetzte Produktionsrückstände wie insbesondere Späne zu dem Sammelbehälter S mit der Filtrierungsanlage 16 leitet. Da die Ablaufleitung 13 des Druck-Spülbehälters 15 im Gefälle aufwärts nach der Einmündung der Zubringerleitung 9 in die Einmündung E der Rücklauf-Rohrleitung 10 einmündet, ist eine Spülung des gesamten verunreinigten Bereichs der Rücklauf-Rohrleitung 10 möglich.

Zur Belüftung des Druck-Spülbehälters 15 ist weiter bevorzugt ein betätigbares Belüftungsventil 27 vorgesehen, das über eine entsprechende Belüftungsleitung im oberen Bereich des Druck-Spülbehälters 15, über dem Freispiegel 24, mündet.

Nach einer Spülung der Rücklauf-Rohrleitung 10 kann der Unterdruck in dem Druck-Spülbehälter 15 durch das Belüftungsventil 27 ausgeglichen werden. Durch Öffnen des Belüftungsventils 27 kann Luft in den Druck-Spülbehälter 15 gelangen. Somit ist dann ein Druckausgleich in dem Druck-Spülbehälter 15 mit der Atmosphäre geschaffen.

Darüber hinaus ist ein Druckluftanschluss vorgesehen, mit einer entsprechenden Druckluftleitung 28 und einem weiteren betätigbaren Ventil 29, um den Druck in dem Druck-Spülbehälter 15 gegebenenfalls aufzubauen oder zu erhöhen.

Durch die Druckluftleitung 28 und das Ventil 29 ist es möglich, den Druck in dem Druck-Spülbehälter 15 zu erhöhen, so dass eine Spülung ausgelöst wird, um die Rücklauf-Rohrleitung 10 von Verunreinigungen zu befreien.

Weiter kann bevorzugt ein (Flüssigkeits-) Drucksensor 30 an dem Druck-Spülbehälter 15 vorgesehen sein. Zur Erfassung eines bestimmten, voreinstellbaren Druckes, bei welchem eine Spülung wie beschrieben, ggf. erfolgen soll.

Durch den Drucksensor 30 ist es möglich, immer erst dann eine Spülung durchführen zu lassen, wenn sich der Druck-Spülbehälter 15 soweit gefüllt hat, bis der eingestellte Druck erreicht worden ist. Der Spülvorgang der Rücklauf-Rohrleitung 10 kann intermittierend durchgeführt werden. Das Intervall der Spülung der Rücklauf-Rohrleitung 10 wird dann durch die Füllgeschwindigkeit des Druck-Spülbehälters 15 vorgegeben. Nachdem der Druck-Spülbehälter 15 soweit wieder mit dem gereinigten Medium 25 gefüllt worden ist, dass sich der voreingestellte Druck ergibt, so löst dann der Drucksensor 30 nach Ablauf der eingestellten Intervallzeit das Auslassventil aus und gibt eine Spülung der Rücklauf-Rohrleitung 10 frei.

Durch die Spülung der Rücklauf-Rohrleitung 10 wird eine Schmutzablagerung durch Sedimentation verhindert. Die Spülung der Rücklauf-Rohrleitung 10 kann an die unterschiedliche Sedimentationsgeschwindigkeit der unterschiedlichen Verarbeitungsrückstände angepasst werden. Die maximale Häufigkeit der Spülung der Rücklauf-Rohrleitung 10 hängt von der Füllgeschwindigkeit des Druck-Spülbehälters 15 ab. Durch den Drucksensor 30 wird eine Spülung erst dann ausgelöst, wenn in den Druck-Spülbehälter 15 der eingestellte Druck erreicht worden und die eingestellte Intervallzeit abgelaufen ist. Dann wird durch ein Signal des Drucksensors 30 ein Öffnen des Auslassventils 26 automatisch veranlasst. So kann der Druck in dem Druck-Spülbehälter 15 nicht über den vorgegebenen Wert ansteigen.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zur Entsorgung von flüssigen Medien (25) mit Verarbeitungsrückständen, wie bspw. Späne, von Bearbeitungsmaschinen (1,2,3) in einem Produktionsbetrieb, wobei die Medien (25) über eine oder mehrere Rücklauf- Rohrleitungen (10) einem Sammelbehälter (S) zur filtrierenden Aufbereitung zugeführt werden, **dadurch gekennzeichnet, dass** aufbereitetes Medium (25) in einen Druck- Spülbehälter (15) geleitet wird und aus dem Druck- Spülbehälter (15) kontinuierlich oder diskontinuierlich mit Hilfe dieses Mediums (25) eine Spülung der Rücklauf- Rohrleitung (10) vorgenommen wird.

2. Verfahren nach Anspruch 1 oder insbesondere danach, **dadurch gekennzeichnet, dass** das aufbereitete Medium (25) solches ist, das auch zur Wiederverwendung in die Bearbeitungsmaschine (1,2,3) geleitet wird.

3. Verfahren nach einem oder mehreren der vorangehenden Ansprüche oder insbesondere danach, **dadurch gekennzeichnet, dass** von dem Medium (25) in dem Druck- Spülbehälter (15) ein Freispiegel (24) ausgebildet wird.

4. Verfahren nach einem oder mehreren der vorangehenden Ansprüche oder insbesondere danach, **dadurch gekennzeichnet, dass** das Medium (25) aus dem Druck- Spülbehälter (15) mittels einer gesonderten Druckbeaufschlagung und/oder aufgrund der Höhenlage des Druck- Spülbehälters (15) in die Rücklauf- Rohrleitung (10) eingebracht wird.

5. Verfahren nach einem oder mehreren der vorangehenden Ansprüche oder insbesondere danach, **dadurch gekennzeichnet, dass** das aufbereitete Medium (25) für den Druck- Spülbehälter (15) und die Bearbeitungsmaschinen (1,2,3) zunächst, nach dem Sammelbehälter (S), durch dieselbe Leitung (17) gefördert wird.

6. Verfahren nach einem oder mehreren der vorangehenden Ansprüche oder insbesondere danach, **dadurch gekennzeichnet, dass** die Spülung der Rücklauf- Rohrleitung (10) in Abhängigkeit eines in dem Druck-Spülbehälter (15) herrschenden Drucks steht.

7. Verfahren nach einem oder mehreren der vorangehenden Ansprüche oder insbesondere danach, **dadurch gekennzeichnet, dass** die Spülung der Rücklauf-Rohrleitung (10) intermittierend, in einstellbaren bzw. voreingestellten Zeitabständen erfolgt.

8. Anordnung von Bearbeitungsmaschinen (1,2,3) in einem Produktionsbetrieb im Verbund mit einer Vorrichtung zur Entsorgung von flüssigen Medien (25) mit Verarbeitungsrückständen, wie bspw. Späne, der Bearbeitungsmaschinen (1,2,3), wobei jede Bearbeitungsmaschine (1,2,3) mittels einer Rücklauf- Rohrleitung (10) an einen Sammelbehälter (S) angeschlossen ist, in dem auch eine filtrierende Aufbereitung des Mediums (25) durchgeführt wird und mindestens ein Druck- Spülbehälter (15) vorgesehen ist, der mit dem Medium (25) füllbar ist zur Spülung der Rücklauf- Rohrleitung (10) an diese angeschlossen ist, **dadurch gekennzeichnet, dass** eine von dem Sammelbehälter (S) ausgehende Leitung (17) für aufbereitetes Medium (25) sowohl zu den Bearbeitungsmaschinen (1,2,3) wie auch unmittelbar zu dem Druck- Spülbehälter (15) verläuft.

9. Anordnung nach Anspruch 7 oder insbesondere danach, **dadurch gekennzeichnet, dass** von der Bearbeitungsmaschine (1,2,3) kommendes nicht aufbereitetes Medium (25) nur in den Sammelbehälter (S) fließen kann.

10. Anordnung nach einem oder mehreren der Ansprüche 7 und 8 oder insbesondere danach, **dadurch gekennzeichnet, dass** in den Druck- Spülbehälter (15) eine Druckluftleitung (28) mündet.

11. Anordnung nach einem oder mehreren der Ansprüche 7 bis 9 oder insbesondere danach, **dadurch gekennzeichnet, dass** der Druck- Spülbehälter (15) einen Druckluftanschluss für die Druckluftleitung (28) aufweist.

12. Anordnung nach einem oder mehreren der Ansprüche 7 bis 10 oder insbesondere danach, **dadurch gekennzeichnet, dass** der Druck- Spülbehälter (15) zur Ausbildung eines Freispiegels (24) des Mediums (25) in den Druck- Spülbehälter (15) hermetisch schließbar ist.

13. Anordnung nach einem oder mehreren der Ansprüche 7 bis 11 oder insbesondere danach, **dadurch gekennzeichnet, dass** in die Zubringerleitung (9) ein Absperrventil (11) und/oder eine Rückschlagklappe (12) angeordnet ist.

14. Anordnung nach einem oder mehreren der Ansprüche 7 bis 12 oder insbesondere danach, **dadurch gekennzeichnet, dass** ein Auslassventil (26) vor einer Einmündung (E) der Ablaufleitung (13) des Druck- Spülbehälters (15) in die Rücklauf- Rohrleitung (10) angeordnet ist.

15. Anordnung nach einem oder mehreren der Ansprüche 7 bis 13 oder insbesondere danach, **dadurch gekennzeichnet, dass** in der Zuleitung (22) des Druck- Spülbehälters (15) ein Durchflussbegrenzer (23) angeordnet ist.

16. Anordnung nach einem oder mehreren der Ansprüche 7 bis 14 oder insbesondere danach, **dadurch gekennzeichnet, dass** die Rücklauf-Rohrleitung (10) jedenfalls ab der Einmündung (E) des Druck- Spülbehälters (15) mit einem Gefälle ausgebildet ist.

17. Anordnung nach einem oder mehreren der Ansprüche 7 bis 15 oder insbesondere danach, **dadurch gekennzeichnet, dass** an dem Druck- Spülbehälter (15) ein betätigbares Belüftungsventil (27) vorgesehen ist.
